# EUROPEAN PATENT SPECIFICATION

(11) **EP 0 811 898 B1**
(45) Date of publication and mention of the grant of the patent: **07.04.2004**
(21) Application number: 96113837.7
(22) Date of filing: 29.08.1996
(51) Int. Cl.: G05B 19/4093

(54) **Automatic programming apparatus for numerical control roll grinder**
Automatisches Programmierungsgreät für Walzenschleifer mit numerischer Steuerung
Appareil de programmation automatique de rectifieuse de cylindres à commande numérique

(30) Priority: 06.06.1996 JP 14456196
(43) Date of publication of application: 10.12.1997
(73) Proprietor: TOSHIBA KIKAI KABUSHIKI KAISHA, Tokyo (JP)
(72) Inventor: Uchimura, Hiroshi, Numazu-shi, Shizuoka-ken (JP); Watanabe, Takazumi, Mishima-shi, Shizuoka-ken (JP); Endo, Nobuyuki, Mishima-shi, Shizuoka-ken (JP); Tatara, Masayuki, Numazu-shi, Shizuoka-ken (JP); Kabe, Haruki, Yokohama-shi, Kanagawa-ken (JP); Shimizu, Keiji, Hiratsuka-shi, Kanagawa-ken (JP); Kimura, Kazuo, Fujisawa-shi, Kanagawa-ken (JP); Sugiyama, Motone, Chigasaki-shi, Kanagawa-ken (JP)
(74) Representative: Zangs, Rainer E., Dipl.-Ing.

(56) References cited:
- EP-A- 0 407 611
- EP-B- 0 164 686
- DE-A- 3 345 269
- JP-A- 8 108 344
- US-A- 4 293 913
- US-A- 4 608 643
- US-A- 4 887 221

## Description

### BACKGROUND OF THE INVENTION

### Field of the Invention

The present invention relates to an automatic programming apparatus which generates a numerical control (NC) program for processing a roll and particularly, it relates to an automatic programming apparatus for generating the NC program which is applicable to a NC roll grinder for grinding all over the cylindrical part and the axle parts of the roll.

### Description of the Related Art

Generally, a large-sized roll includes a cylindrical part and multistage axle parts on both sides of the cylindrical part. The whole of the cylindrical part and the axle parts are ground up by the NC roll grinder.

In processing the roll, it has been executed that an operator inputs dimensional values of the roll and various processing conditions for each of the cylindrical and axle parts thereby to generate partial programs for the respective parts individually and therefore, the whole of the cylindrical and axle parts are processed by combining the inputted dimensional values with the inputted processing conditions, respectively. Note, for an example, the dimensional values of the roll are constituted by an axle length, a diameter, a roll profile etc., while the various processing conditions are constituted by a method of supporting the roll, a rotating speed of a main spindle, a feed rate, etc.

In the conventional NC program for processing the roll, however, the operator has to establish the processing conditions every part of the cylindrical and axle parts since the dimensional values and the processing conditions established every part of the cylindrical and axle parts in a one-to-one correspondence. Consequently, when the number of steps in the axle parts of the roll is large, the number of partial programs will be increased correspondingly and the setting of the processing conditions will be complicated in processes from roughing to finishing, so that it requires an enormous time to generate the NC program and increases the possibility of making mistake.

In addition, even when changing the processing order of the respective parts of the roll or when changing the axle lengths, the diameters, the roll-profiles and the processing conditions among the similar manufacturing processes partially, it is necessary to modify the NC program in grammar, requiring a considerable NC programming knowledge to the operator.

For this reason, mostly, the grinding of the large-sized roll having a large number of axle steps has been executed by the operator's manipulation.

US 5,595,525 describes a numerically controlled grinding machine for grinding a cylindrical surface of a work piece by relative movement between the work piece and the grinding wheel. The grinding conditions as for example a grinding method and a finishing diameter of the work piece may be inputted so that data necessary for grinding the work piece are automatically determined depending upon the grinding conditions. Further, the automatic determination of the grinding data carried out by the numerical controller based upon the shape data inputted and the grinding conditions is described.

EP 0 407 611 describes an automatic programming apparatus for efficient programme preparation in generating a programme and teaches to use macro commands.

US 4,887,221 describes a computer-controlled machine tool, e.g. a honing machine, relying to rapidly input data as to each type of work piece available on working drawings or blue prints, directly into the interactive machine tool. The control accepts such inputs including data as to the desired finish bore diameter, starting bore diameter, bore length, work piece material and similar. Thereafter, the appropriate machine parameters are calculated based on the input data, these parameters including spindle RPM, stroke rate, feed rate and similar.

DE 33 45 269 describes a numerical control device for a machine for successively machining a multiplicity of areas of a rotating work piece which are located axially behind one another. In a first area of a memory section a number for designating the order in which the corresponding work piece areas are to be machined is stored, and comprises a second area for storing a command which relates to the machining of the corresponding work piece area, and a third area is arranged for storing a numerical control programme section which is composed of a multiplicity of data blocks which are generating for the corresponding work piece area.

### SUMMARY OF THE INVENTION

It is an object of the present invention to provide an automatic programming apparatus which is capable of generating the NC program interactively (i.e. the form of dialogue between the operator and the apparatus) in a short time and without making mistakes in spite of a large number of axle steps of the roll and which makes it possible to change the processing order of the respective parts and to change the dimensional values (ex. the axle length, the diameter, the roll-profile, etc.) and the processing conditions partially without requiring the considerable NC programming knowledge to the operator.

This object of the invention is solved by an automatic programming apparatus for programming a numerical control program to apply various processings on a roll having a cylindrical part and at least one stepped axle part formed on both ends of said cylindrical part, said apparatus comprising, on condition that said cylindrical part and said axle parts are represented by locational codes and said various processings are represented by processing codes, respectively: a roll-profile setting means for setting dimensional values of said roll for each of said locational codes in the form of dialogue between an operator and said apparatus; a processing-condition setting means for setting various processing conditions for each of said processing codes in the form of dialogue between the operator and said apparatus at every processing code; a processing-order setting means for optionally combining said locational codes with said processing codes for each of processing order of said roll in the form of dialogue between the operator and said apparatus, thereby determining the processing order of said cylindrical part and said axle parts while allocating said processing conditions to said cylindrical part and said axle parts; and
an automatic programming means for programming a numerical control program for executing a series of roll processing on the basis of the combination of the processing code and the locational code established by said processing-order setting means; wherein, in order to generate said numerical control program, said automatic programming means operates to obtain the roll-profile characteristics of the corresponding locational code from said roll-profile setting means and to obtain the processing conditions of the corresponding processing code from said processing-condition setting means, thereby producing partial programs for said cylindrical part and said axle parts, said automatic programming means establishes respective process-starting positions that said partial programs define, on the basis of the whole roll-profile originating in the dimensional values established by said roll-profile setting means; and said automatic programming means further operates to arrange said partial programs so that said partial programs are executed in accordance with the processing order established by said processing-order setting means.

In the above-mentioned automatic programming apparatus of the invention, the dimensional values, such as axle lengths, diameters and roll-profiles, are established every locational code by the roll-profile setting means interactively, while the processing conditions are established every processing code by the processing-condition setting means interactively. Similarly, by the processing-order setting means, the locational codes can be optionally combined with the processing codes every processing order interactively, while the processing order of the cylindrical arid axle parts of the roll can be established and the processing conditions can be allocated to the respective parts.

Further, by the automatic programming means, partial programs for the respective parts can be generated on the basis of the combinations of the locational codes with the processing codes established by the processing order setting means. Then, these partial programs are rearranged so as to be executed in accordance with the processing order established by the processing-order means, whereby the NC program for carrying out a series of roll processing can be completed.

Further, the automatic programming apparatus may include tool condition setting means for setting information of tools in the form of dialogue between the operator and the apparatus at every number of a tool magazine of on automatic tool changer; wherein, in order to produce the numerical control program, the automatic programming means operates to obtain the roll-profile characteristics of the corresponding locational code from the roll-profile setting means and obtain the processing conditions of the corresponding processing code from the processing-condition setting means and obtain the tool inflammations of the corresponding number of the tool magazine from the tool condition setting means, thereby generating partial programs for the constituents of the cylindrical part and the axle parts: and wherein the automatic programming means further operates to arrange the partial programs so that the partial programs are executed in accordance with the processing order established by the processing-order setting means.

Also in the above-mentioned automatic programming apparatus, the dimensional values, such as axle lengths, diameters and roll-profiles, are established every locational code by the roll-profile setting means interactively. Further, the tool information is established every number of a tool magazine by the tool-condition setting means interactively, while the processing conditions including an indication of the tool on use are established every processing code by the processing-condition setting means interactively. Similarly, by the processing-order setting means, the locational codes can be optionally combined with the processing codes every processing order interactively, while the processing order of the cylindrical and axle parts of the roll can be established and the processing conditions can be allocated to the respective parts. Further, by the automatic programming module, the partial programs for the respective parts can be generated on the basis of the combinations of the locational codes with the processing codes established by the processing order setting means. Then, these partial programs are rearranged so as to be executed in accordance with the processing order established by the processing-order means, whereby the NC program for carrying out a series of roll processing can be completed.

In common with the above-mentioned apparatuses, preferably, the automatic programming means establishes respective process-starting positions that the partial programs define, on the basis of the whole roll-profile originating in the axle lengths of the respective parts, the diameters, the roll-profiles, etc. established by the roll-profile setting means. In this case, by the automatic programming means, the respective process-starting positions that the partial programs define are established on the basis of the whole roll-profile originating in the axle lengths of the respective parts, the diameters, the roll-profiles, etc. established by the roll-profile setting means.

In the present invention, more preferably, the processing-order setting means is capable of setting common processing characteristics in processing the respective parts of the roll, such as "stand-by" operations and measurement operations, collectively.

It is also preferable that, in the above-mentioned apparatus, each partial program includes a program described by numerical control (NC) codes and a program described by macro-codes containing a plurality of NC codes.

More preferably, the NC program comprises a program containing the processing conditions, the moving conditions, etc. and another program containing the common parameters, the roll-profile and the tool conditions.

Note, the automatic programming apparatus of the invention may be constituted by a computer system such as a personal computer. In such a case, each of the roll-profile setting means, the processing-condition setting means, the processing-order setting means, the tool-condition setting means and the automatic programming means can be realized by software that the computer system executes.

These and other objects and features of the present invention will become more fully apparent from the following description and appended claims taken in conjunction with the accompany drawing.

### BRIEF DESCRIPTION OF THE DRAWINGS

Fig. 1 is a block diagram showing components of an automatic programming apparatus for a NC roll grinder, in accordance with an embodiment of the present invention;
Fig. 2 is an explanatory diagram showing an example of display for a main menu;
Fig. 3 is an explanatory diagram showing an example of display for setting a roll identifier (ID);
Figs. 4A and 4B are explanatory diagrams showing respective examples of display for setting the common parameters;
Figs. 5A and 5B are explanatory diagrams showing respective examples of display for setting roll profiles for the axle parts;
Fig. 6 is an explanatory diagram showing an example of display for setting roll profiles for the cylindrical part;
Fig. 7 is an explanatory diagram showing an example of the roll profile on display;
Figs. 8A and 8B are explanatory diagrams showing respective examples of display for setting the processing conditions;
Fig. 9 is an explanatory diagram showing an example of display for setting the grinding conditions;
Fig. 10 is an explanatory diagram showing an example of display for setting the processing order; and
Fig. 11 is an explanatory diagram showing an example of the partial program.

### DESCRIPTION OF THE PREFERRED EMBODIMENT

An embodiment of the present invention will be described with reference to the drawings.

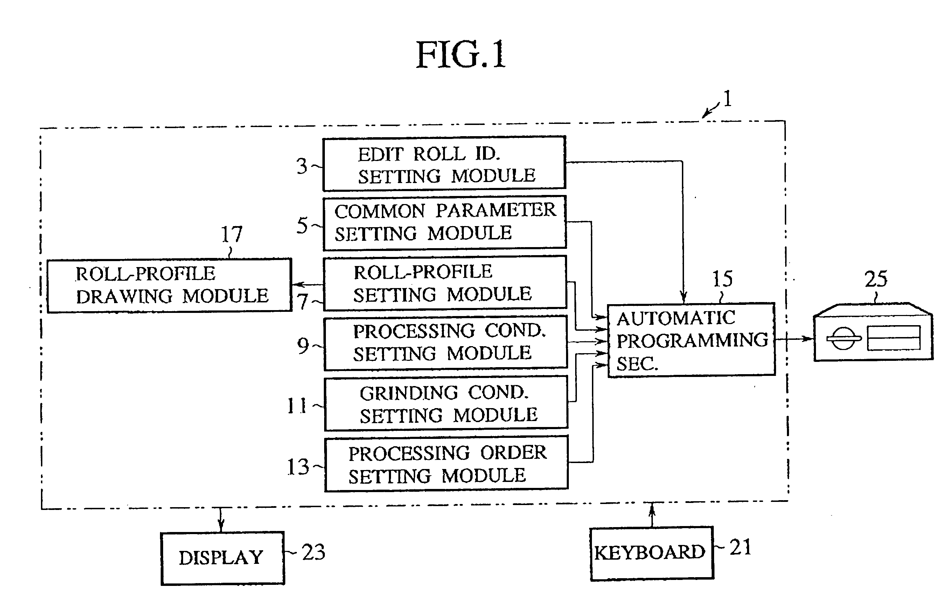

Figures 1 shows an automatic NC (numerical control) programming apparatus for processing a roll, in accordance with the embodiment of the present invention, which is applied for a NC roll grinder quipped with an automatic tool (grindstone) changer.

The automatic NC programming apparatus 1 comprises an edit roll ID (identifier) setting module 3, a common parameter setting module 5, a roll-profile setting module 7, a processing condition setting module 9, a grinding condition setting module 11 as a tool condition setting module, a process-order setting module 13, an automatic programming module 15 and a roll-profile drawing module 17.

The automatic NC programming apparatus 1 is constituted by a personal computer actualizing operations of the edit roll ID setting module 3, the common parameter setting module 5, the roll-profile setting module 7, the processing condition setting module 9, the grinding condition setting module 11, the process order setting module 13, the automatic programming module 15 and the roll-profile sketch processing module 17 in accordance with programs.

A keyboard 21, a display 23 such as CRT, and a floppy disc driver (FDD) 25 are electrically connected to the automatic NC programming apparatus 1.

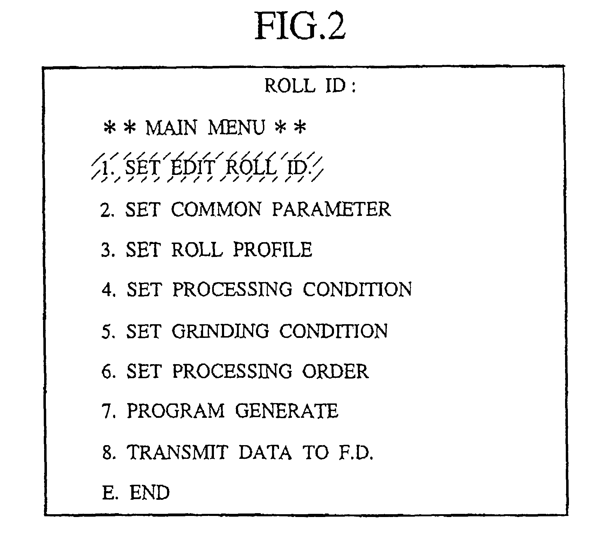

By activating the programming system program, the automatic NC programming apparatus 1 displays a main menu as shown in Fig. 2 on the display 23. Owing to this main menu, it is possible for an operator to select any one of various items consisting of "SET EDIT ROLL ID", "SET COMMON PARAMETER", "SET ROLL-PROFILE", "SET PROCESSING CONDITION", "SET GRINDING CONDITION", "SET PROCESSING ORDER", "PROGRAM GENERATE" and "TRANSMIT DATA TO F.D.".

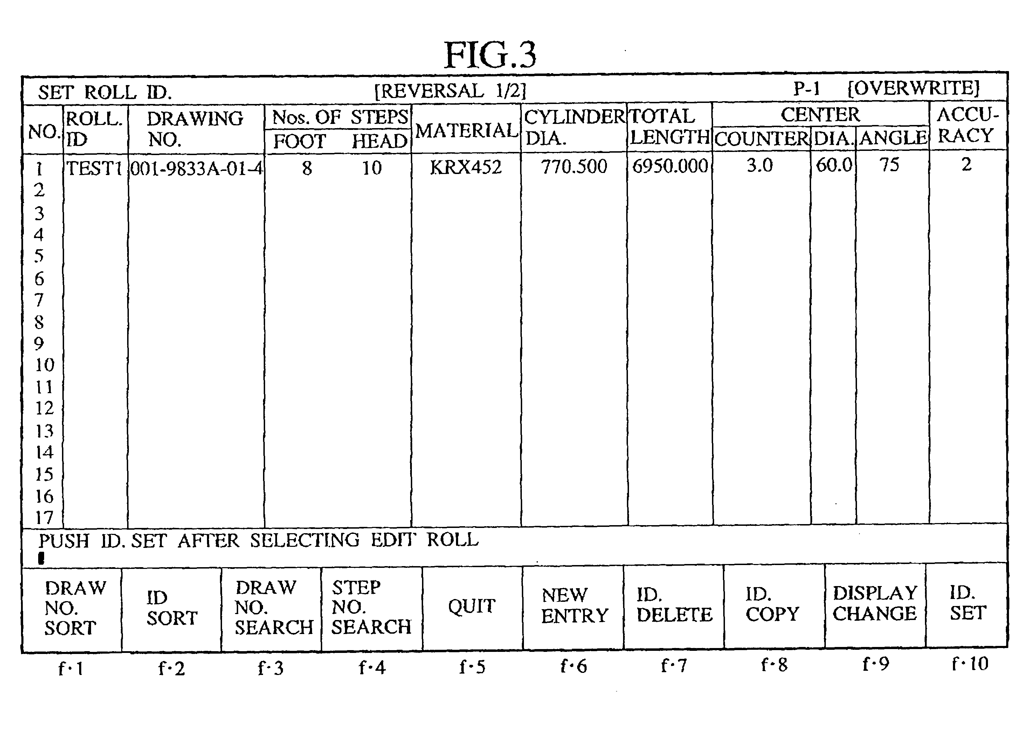

In this main menu, when the item of "SET EDIT ROLL ID" is selected, the edit roll ID setting module 3 operates to display a roll ID setting picture as shown in Fig. 3 on the display 23. In the roll ID setting picture, owing to the module 3, a drawing number, numbers of steps in an axle part on the side of footstock, numbers of steps in an axle part on the side of headstock, materials, a diameter of the cylindrical part, a total length, center information and accuracy are established for each roll ID in the form of dialogue between the operator and the computer. Thereafter, when a key "f 10" is depressed, the roll ID indicated in such an interactive manner can be established to a specific roll as an object of edit.

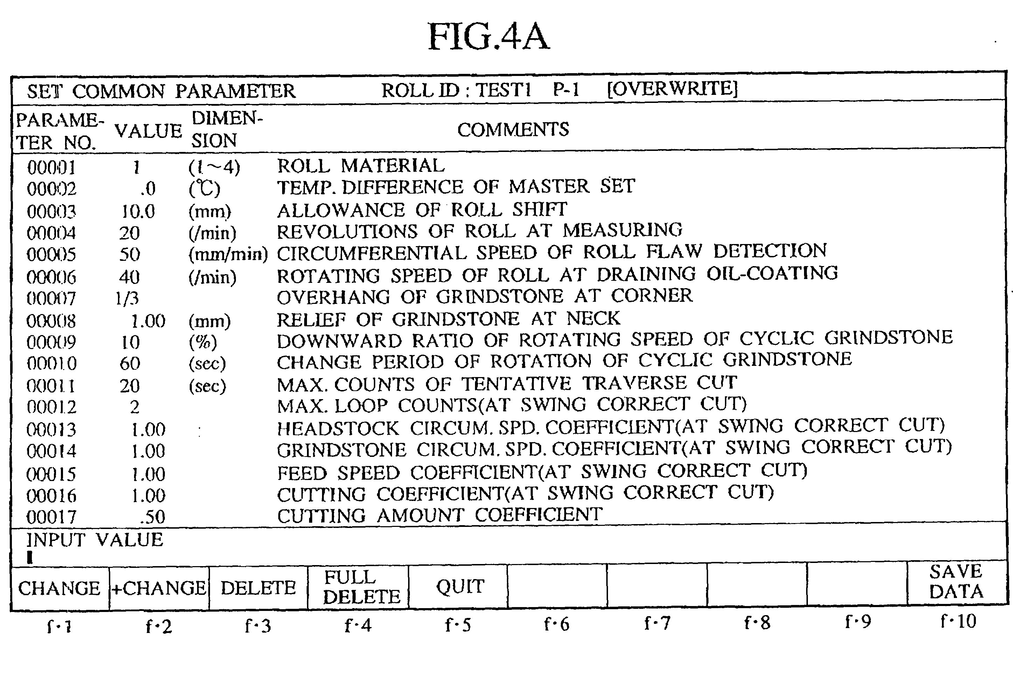

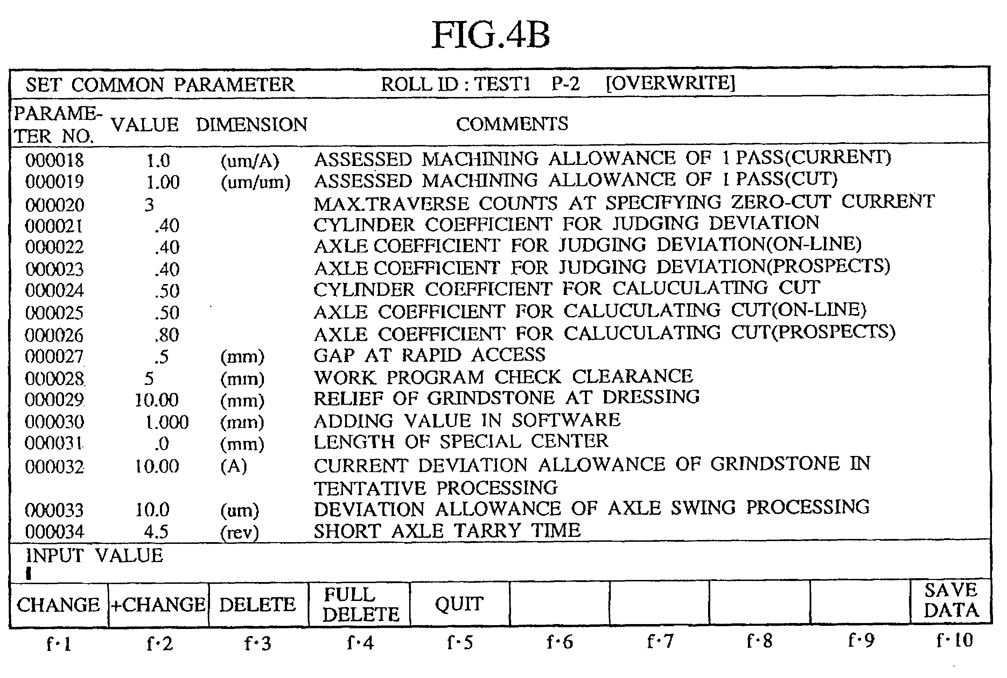

On the other hand, when the item of "SET COMMON PARAMETER" is selected, the common parameter setting module 5 is activated so as to display common parameter setting pictures as shown in Figs. 4A and 4B on the display 23. Then, in this common parameter setting picture, owing to the common parameter setting module 5, so-called "common" parameters necessary for generating programs, i.e. roll materials, respective allowances, various kinds of coefficients, etc., are established interactively. It should be noted that these common parameters can be also changed or deleted on this common parameter setting picture at will.

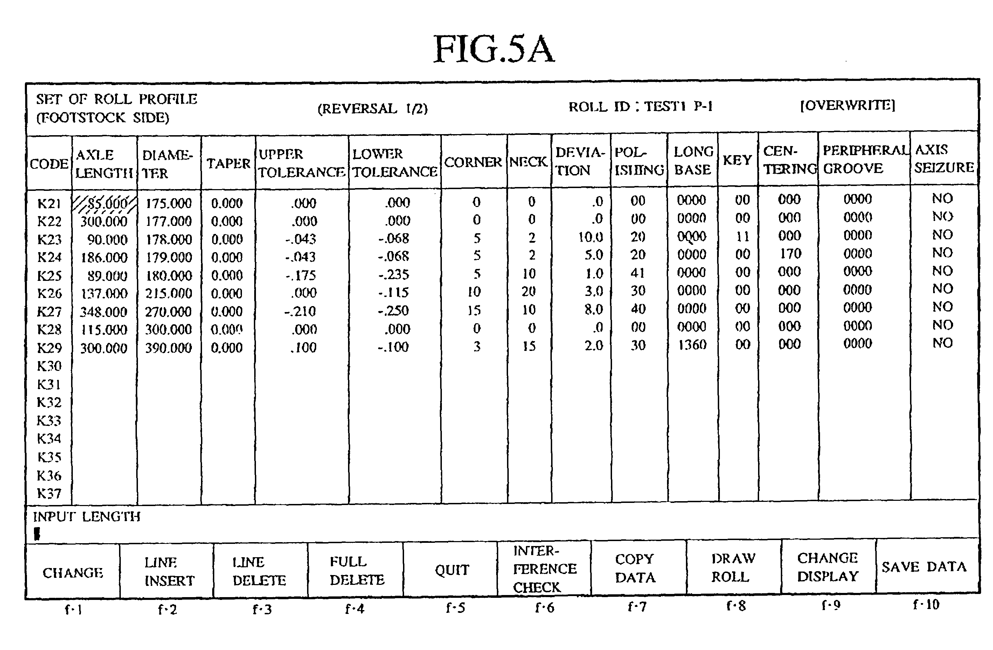

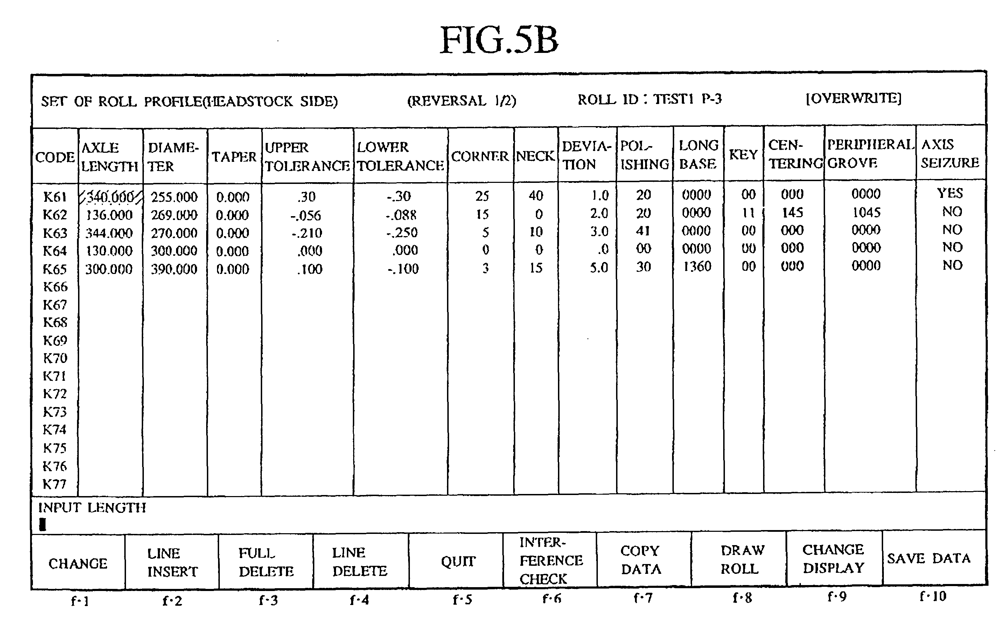

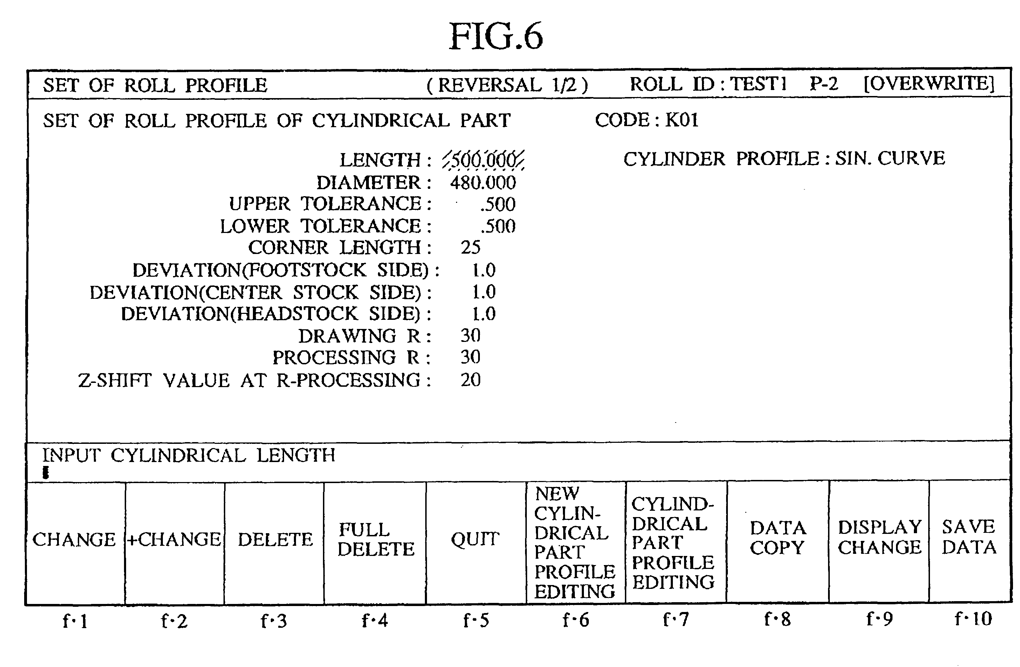

In the main menu, when the item of "SET ROLL-PROFILE" is selected, the roll-profile setting module 7 is activated. The module 7 serves to display roll-profile setting pictures as shown in Figs. 5A, 5B and 6 on the display 23. In the roll-profile setting pictures of Figs. 5A and 5B, owing to the roll-profile setting module 7, respective axle parts on both sides of the footstock and the headstock are represented by individual codes K21 to 37 and K61 to 77, respectively, and various dimensional values, such as axle length, diameter, taper angle, dimensions of corner and neck are established for each of the above codes interactively. Further, in the roll-profile setting pictures of Fig. 6, the roll-profile setting module 7 serves to establish a length of the cylindrical part at code K01, the diameter and the profile characteristics (ex. straight, sin. curve, arc curve, secondary curve) interactively.

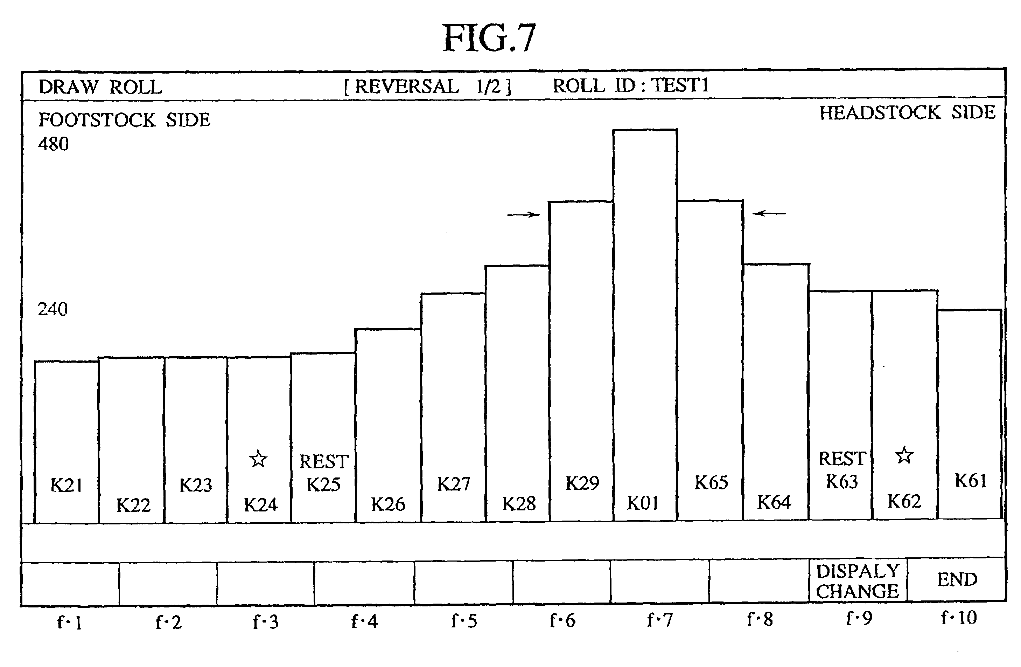

In the setting example shown in Figs. 5A and 5B, the number of steps of the axle part on the footstock side is nine, while the number of steps of the axle part on the headstock side is five. When a key of "f8" is depressed in the roll-profile setting picture of Fig. 5A or Fig. 5B, the roll-profile sketch processing module 17 is activated so as to display a roll-profile picture as shown in Fig. 7 on the display 23. It should be noted that this roll-profile can be optionally changed or deleted on the above-mentioned roll-profile setting picture.

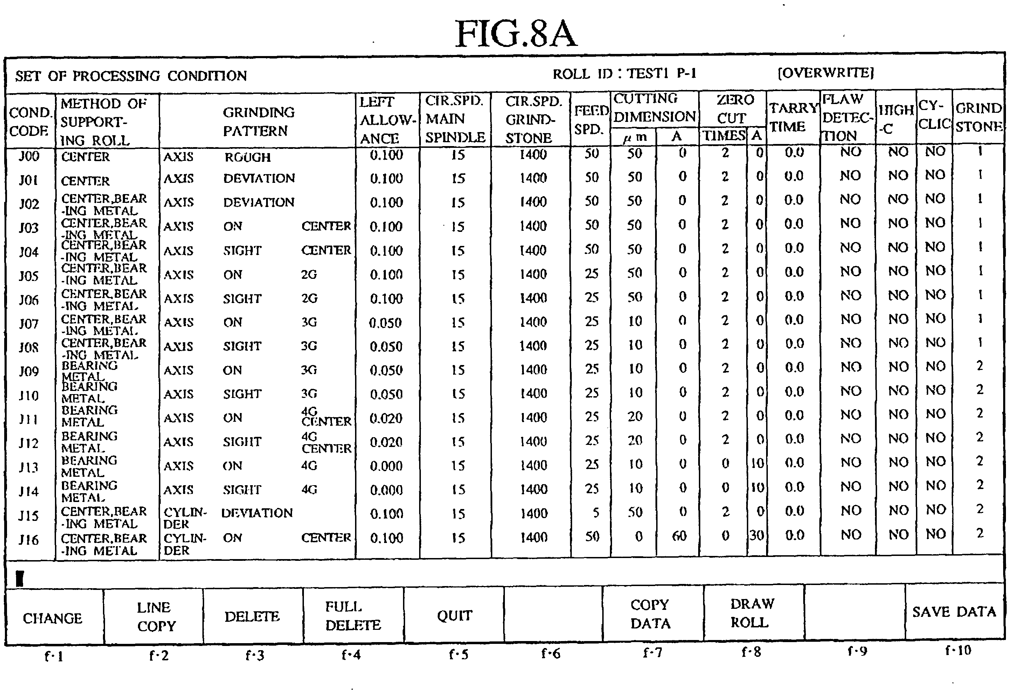

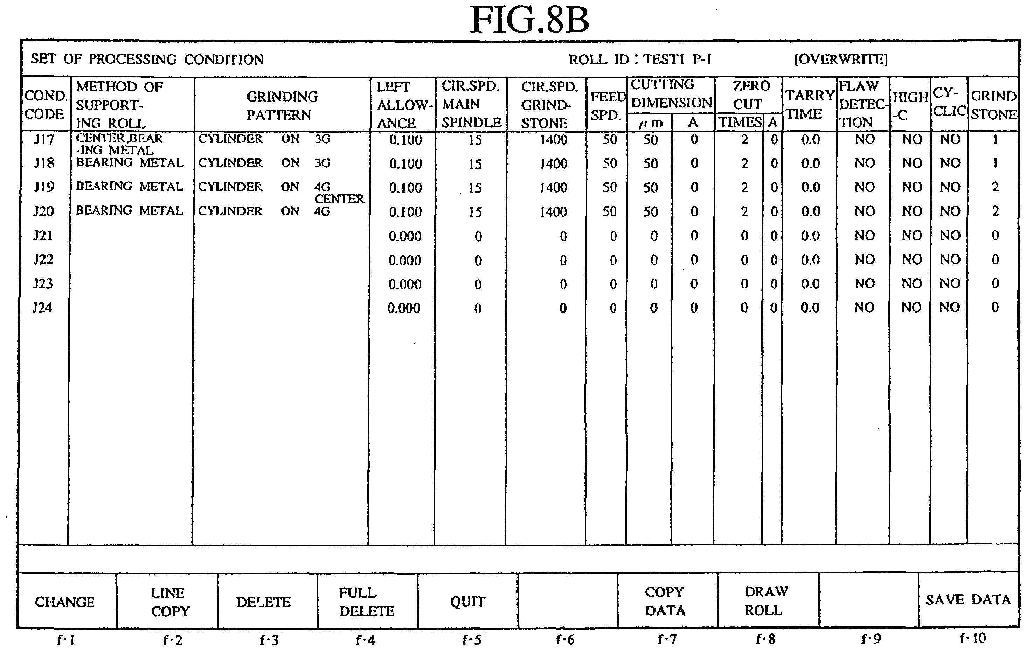

When the item of "SET PROCESSING CONDITION" is selected in the main menu, the processing condition setting module 9 is activated. The module 9 serves to display processing condition setting pictures as shown in Figs. 8A and 8B on the display 23. In the pictures of Figs. 8A and 8B, owing to the processing condition setting module 9, various processing conditions, such as a method of supporting the roll, a grinding pattern, circumferential speed of a main spindle, circumferential speed of a grindstone, feed speed, a grindstone on use (magazine No.) can be established interactively. Note, these processing conditions can be optionally changed or deleted on this processing condition setting picture.

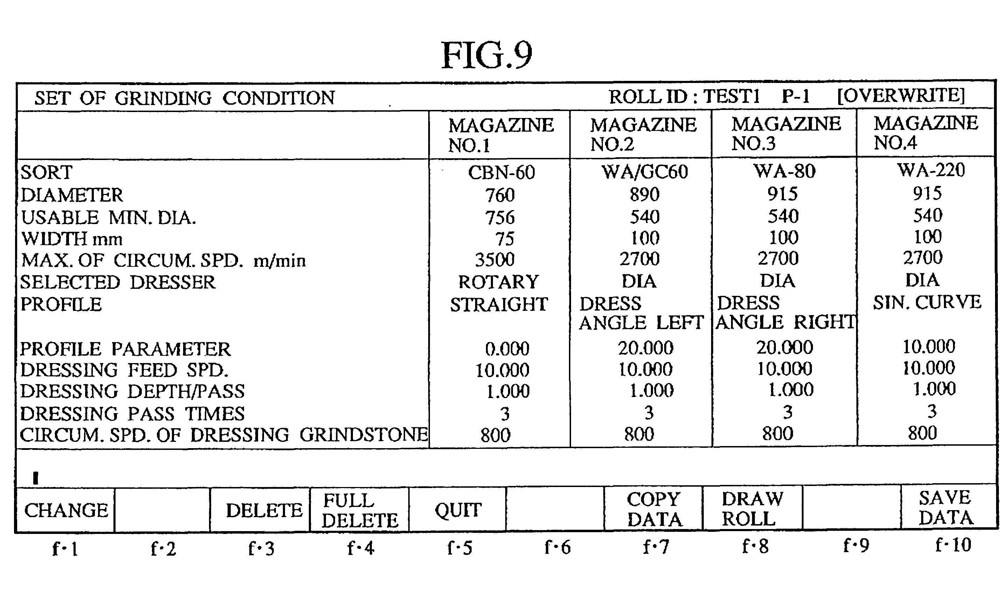

When the item of "SET GRINDING CONDITION" is selected in the main menu, the grinding condition setting module 11 is activated. The module 11 serves to display a grinding condition setting picture as shown in Fig. 9 on the display 23. In this picture of Fig. 9, owing to the grinding condition setting module 11, various grinding conditions, i.e. sorts of grindstones of No. 1 to No. 4, the diameters of the grindstones, the minimum diameters of the usable grindstones, the widths of the grindstones, the maximum values of the circumferential speeds, kinds of selected dressers, various parameters in dressing, etc. can be established interactively. Note, these grinding conditions can be changed or deleted on this grinding condition setting picture optionally.

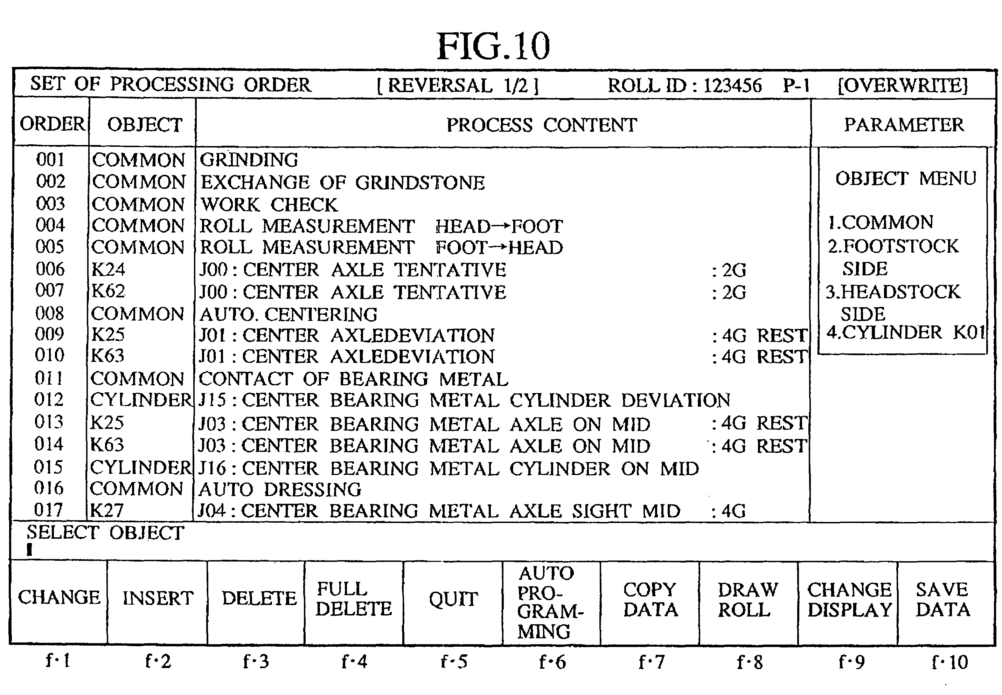

Next, when the item of "SET PROCESSING ORDER" is selected in the main menu, the processing order setting module 13 is activated. The module 13 operates to display a processing order setting picture as shown in Fig. 10 on the display 23. In the picture of Fig. 10, owing to the processing order setting module 13, any one of the above locational codes K ## is combined with any one of the above processing codes J ## at every processing order ( every line ) interactively and optionally, so that the processing order of the cylindrical part and the axle parts is established while the processing conditions are allocated to the respective parts, The locational codes K ## are inputted in a column of "OBJECT" in a setting table of the processing order setting picture on the display 23, while the processing codes J ## are inputted in a column of "PROCESS CONTENT" in the setting table. The processing order is determined by the number ( line number) of the locational codes K ## inputted in the column of "OBJECT".

It is also possible to input a term "COMMON" in the column of "OBJECT". In the line of "COMMON ", stand-by operations ( ex. preparation for grinding, automatic centering, contact of bearing metal etc.) and measuring operations (ex. roll measurement, work check etc.) common to processing of the respective parts are established collectively. Consequently, it is possible to decrease the number of times for establishment by the operator, so that the time requiring for programming the NC program can be shortened while the possibility of fail in establishment can be reduced.

Of course, it will be easily understood that the arrangement allows both of the processing order and the combination of the locational codes K ## with the processing codes J ## to be changed, inserted or deleted on this processing order setting picture optionally.

Next, when the item of "PROGRAM GENERATE" is selected in the main menu, the automatic programming module 15 operates. Based on the combinations of the locational codes K ## with the processing codes J ## established by the processing order setting module 13, the module 15 serves to obtain both of the roll-profile characteristics of the corresponding locational code K ## from the roll-profile setting module 7 and the processing conditions of the corresponding processing code J ## from the processing-condition setting module 9. Additionally, obtaining the information of grindstone in the corresponding magazine from the grinding condition setting module 11 and the common parameters from the common parameter setting module 3 and further incorporating the above stand-by operations and the measuring operations designated in the line of "COMMON ", the module 11 generates partial programs for the respective parts. Next, the module 11 rearranges the order of the partial programs so that they are executed in accordance with the processing order established by the processing-order setting module 13. Consequently, the NC program for executing a series of roll processing can be completed automatically.

That is, it will be understood that the automatic programming module 15 generates the partial program for each of the combinations of the locational codes K ## with the processing codes J ## and that, if only changing the processing order established in the processing order setting module 13, the module 15 generates the NC program in which the processing order is changed correspondingly, automatically.

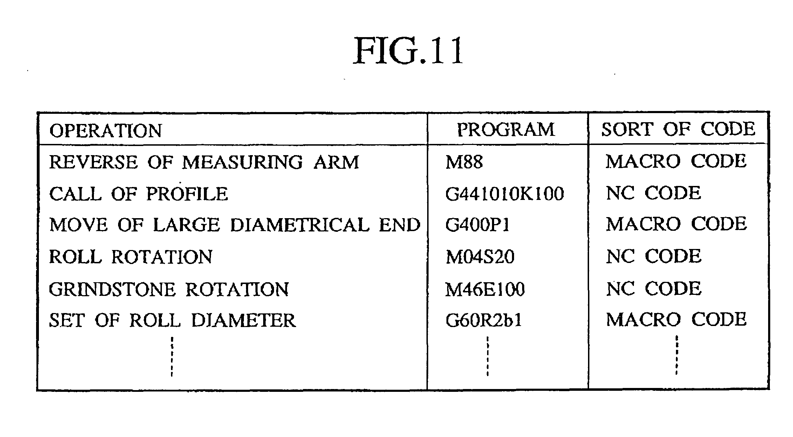

Note, in this specification, the partial programs are defined as ones including not only programs described by NC codes but programs described by macro-codes containing many NC codes. In this case, since the partial programs are shortened while the macro-codes represent the operations, such a constitution allows the operator to understand the contents of processing easily. We now illustrate an example of the partial programs with Fig. 11.

The NC program may be constituted by a program containing not only the processing conditions, movement conditions, etc. but the common parameters, the grinding conditions or the like. In this case, owing to the independent existence of the respective conditions and data, it is possible for the operator to check and confirm the contents easily.

Note, then, the automatic programming module 15 operates to automatically establish respective process-starting positions that the respective partial programs define respectively, on the basis of the whole roll-profile originating in the axle lengths of the respective parts, the diameters and the roll-profiles established by the roll-profile setting module 7, so that the grindstone does not interfere with the roll. In this case, owing to the automatic establishment of the process-starting positions in the partial programs, there is no need to generate a NC program defining a path of the tool between one partial program and the other partial program individually, so that the operator does not have to modify the partial program in changing the processing order of the respective parts of the roll.

Next, when the item of "TRANSMIT DATA TO F.D." is selected in the main menu, the NC program that the automatic programming module 15 generates automatically is transmitted to the FDD 25 and written over a floppy disc installed in the FDD 25. Then, the floppy disc is installed in a FDD of a NC unit of the NC roll grinder, so that the NC program will be read in the NC unit.

It should be noted that the transmission of the NC program from the automatic programming module 15 to the NC unit may be carried out by means of on-line communications, such as RS 232C.

According to the present invention, owing to the respective modules 7, 9, 13, 15 as constituents of the automatic programming apparatus of the invention, it is possible to generate the NC program without fail in spite of a large number of axle steps of the roll, in a short time. Further, it is possible to cope with changes in processing order of the respective parts and partial changes in the dimensional values (ex. the axle length, the diameter, the roll-profile, etc.) and the processing conditions among similar roll-processing without requiring the considerable NC programming knowledge to the operator.

## Claims

1. An automatic programming apparatus (1) for programming a numerical control program to apply various processings on a roll having a cylindrical part and at least one stepped axle part formed on both ends of said cylindrical part, said apparatus comprising, on condition that said cylindrical part and said axle parts are represented by locational codes and said various processings are represented by processing codes, respectively:
a roll-profile setting means (7) for setting dimensional values of said roll for each of said locational codes in the form of dialogue between an operator and said apparatus;
a processing-condition setting means (9) for setting various processing conditions for each of said processing codes in the form of dialogue between the operator and said apparatus at every processing code;
a processing-order setting means (13) for optionally combining said locational codes with said processing codes for each of processing order of said roll in the form of dialogue between the operator and said apparatus, thereby determining the processing order of said cylindrical part and said axle parts while allocating said processing conditions to said cylindrical part and said axle parts; and
an automatic programming means (15) for programming a numerical control program for executing a series of roll processing on the basis of the combination of the processing code and the locational code established by said processing-order setting means;
wherein, in order to generate said numerical control program, said automatic programming means operates to obtain the roll-profile characteristics of the corresponding locational code from said roll-profile setting means and to obtain the processing conditions of the corresponding processing code from said processing-condition setting means, thereby producing partial programs for said cylindrical part and said axle parts,
said automatic programming means establishes respective process-starting positions that said partial programs define, on the basis of the whole roll-profile originating in the dimensional values established by said roll-profile setting means; and
said automatic programming means further operates to arrange said partial programs so that said partial programs are executed in accordance with the processing order established by said processing-order setting means.

2. An automatic programming apparatus as claimed in claim 1, further comprising:
tool condition setting means for setting information of tools in the form of dialogue between the operator and said apparatus at every number of a tool magazine of an automatic tool changer;
wherein the numerical control program is further based on the number of said tool magazine and, in order to produce said numerical control program, said automatic programming means operates to further obtain said tool information of the corresponding number of said tool magazine from said tool condition setting means, for generating the partial programs for the constituents of said cylindrical part and said axle parts.

3. An automatic programming apparatus as claimed in claim 1, wherein said processing-order setting means is capable of setting common processing characteristics in processing said cylindrical part and said axle parts collectively.

4. An automatic programming apparatus as claimed in claim 3, wherein each of said partial programs includes a program described by numerical control codes and a program described by macro codes containing a plurality of numerical control codes.

5. An automatic programming apparatus as claimed in claim 4, wherein said numerical control program comprises a program containing the processing conditions and moving conditions and a program containing common parameters, the roll-profile and tool conditions.

## Revendications

1. Dispositif de programmation automatique (1) destiné à programmer un programme de commande numérique destiné à appliquer divers traitements sur un rouleau comportant une partie cylindrique et au moins une partie réduite de moyeu formée aux deux extrémités de ladite partie cylindrique, ledit dispositif comprenant, à la condition que ladite partie cylindrique et lesdites parties de moyeu soient représentées par des codes de positions et que lesdits divers traitements soient représentés par des codes de traitement, respectivement :
un moyen d'initialisation de profil de rouleau (7) destiné à initialiser les valeurs des dimensions dudit rouleau pour chacun desdits codes de positions sous forme d'un dialogue entre un opérateur et ledit dispositif,
un moyen d'initialisation de condition de traitement (9) destiné à initialiser diverses conditions de traitement pour chacun desdits codes de traitement sous forme d'un dialogue entre l'opérateur et ledit dispositif à chaque code de traitement,
un moyen d'initialisation d'ordre de traitement (13) destiné à combiner optionnellement lesdits codes de positions auxdits codes de traitement pour chacun des ordres de traitement dudit rouleau sous forme d'un dialogue entre l'opérateur et ledit dispositif, en déterminant ainsi l'ordre de traitement de ladite partie cylindrique et desdites parties de moyeu tout en allouant lesdites conditions de traitement à ladite partie cylindrique et auxdites parties de moyeu, et
un moyen de programmation automatique (15) destiné à programmer un programme de commande numérique destiné à exécuter une série de traitement de rouleau sur la base de la combinaison du code de traitement et du code de position établie par ledit moyen d'initialisation d'ordre de traitement,
dans lequel, pour pouvoir générer ledit programme de commande numérique, ledit moyen de programmation automatique agit pour obtenir les caractéristiques de profil de rouleau du code de position correspondant auprès dudit moyen d'initialisation de profil de rouleau et pour obtenir les conditions de traitement du code de traitement correspondant auprès dudit moyen d'initialisation de condition de traitement, en produisant, ainsi des programmes partiels pour ladite partie cylindrique et lesdites parties de moyeu,
ledit moyen de programmation automatique établit des positions de début de traitement respectives que définissent lesdits programmes partiels, sur la base de tout le profil du rouleau ayant pour origine les valeurs de dimensions établies par ledit moyen d'initialisation de profil de rouleau, et
ledit moyen de programmation automatique agit en outre pour agencer lesdits programmes partiels de manière à ce que lesdits programmes soient exécutés conformément à l'ordre de traitement établi par ledit moyen d'initialisation d'ordre de traitement.

2. Dispositif de programmation automatique selon la revendication 1, comprenant en outre :
un moyen d'initialisation d'état d'outil destiné à initialiser des informations des outils sous forme d'un dialogue entre l'opérateur et ledit dispositif pour chaque numéro d'un magasin d'outils d'un changeur d'outil automatique,
où le programme de commande numérique est en outre fondé sur le numéro dudit magasin d'outils et, pour pouvoir produire ledit programme de commande numérique, ledit moyen de programmation automatique agit pour obtenir en outre lesdites informations d'outils du numéro correspondant dudit magasin d'outils auprès dudit moyen d'initialisation d'état d'outil, afin de générer les programmes partiels pour les constituants de ladite partie cylindrique et desdites parties de moyeu.

3. Dispositif de programmation automatique selon la revendication 1, dans lequel ledit moyen d'initialisation d'ordre de traitement peut initialiser des caractéristiques de traitement communes en traitant collectivement ladite partie cylindrique et lesdites parties de moyeu.

4. Dispositif de programmation automatique selon la revendication 3, dans lequel chacun desdits programmes partiels comprend un programme décrit par des codes de commande numérique et un programme décrit par des macro codes contenant une pluralité de codes de commande numérique.

5. Dispositif de programmation automatique selon la revendication 4, dans lequel ledit programme de commande numérique comprend un programme contenant les conditions de traitement et les conditions de déplacement et un programme contenant des paramètres communs, le profil de rouleau et les états des outils.

## Patentansprüche

1. Automatisches Programmiergerät (1) zum Programmieren eines numerischen Steuerprogramms, um verschiedene Verarbeitungen an einer Walze anzuwenden, welche einen zylindrischen Teil und zumindest einen an beiden Enden des zylindrischen Teils ausgebildeten, abgesetzten Achsteil aufweist, wobei unter der Vorraussetzung, dass jeweils das zylindrische Teil und die Achsteile mittels Lage-Codes und die verschiedenen Verarbeitungen mittels Verarbeitungs-Codes dargestellt werden, das Gerät folgendes aufweist:
eine Walzenprofil-Einstelleinrichtung (7) zum Einstellen von Dimensionierungswerten der Walze für jeden der Lage-Codes in der Gestalt eines Dialoges zwischen einem Betreiber und dem Gerät;
eine Verarbeitungsbedingungs-Einstelleinrichtung (9) zum Einstellen verschiedener Verarbeitungsbedingungen für jeden der Verarbeitungs-Codes in der Gestalt eines Dialoges zwischen dem Betreiber und dem Gerät bei jedem Verarbeitungs-Code;
eine Verarbeitungsreihenfolge-Einstelleinrichtung (13) zum wahlweisen Kombinieren der Lage-Codes mit den Verarbeitungs-Codes für jede Verarbeitungsreihenfolge der Walze in der Gestalt eines Dialoges zwischen dem Betreiber und dem Gerät, wodurch die Verarbeitungsreihenfolge des zylindrischen Teils und der Achsteile ermittelt wird, während die Verarbeitungsbedingungen dem zylindrischen Teil und den Achsteilen zugeordnet werden; und
eine automatische Programmiereinrichtung (15) zum Programmieren eines numerischen Steuerprogramms zum Ausführen einer Reihe von Walzenverarbeitungen auf der Basis der Kombination des Verarbeitungs-Codes und des Lage-Codes, welche mittels der Verarbeitungsreihenfolge-Einstelleinrichtung aufgestellt werden;
wobei, um das numerische Steuerprogramm zu erzeugen, die automatische Programmiereinrichtung wirksam wird, um die Walzenprofil-Charakteristika des entsprechenden Lage-Codes von der Walzenprofil-Einstelleinrichtung zu erzielen und um die Verarbeitungsbedingungen des entsprechenden Verarbeitungs-Codes von der Verarbeitungsbedingungs-Einstelleinrichtung zu erzielen, wodurch Teilprogramme für den zylindrischen Teil und die Achsteile erzeugt werden,
wobei die automatische Programmiereinrichtung auf der Basis des gesamten Walzenprofils, das von den mittels der Walzenprofil-Einstelleinrichtung aufgestellten Dimensionswerten ausgeht, jeweilige Prozess-Start-Lagen aufstellt, welche die Teilprogramme bestimmen; und
wobei die automatische Programmiereinrichtung ferner wirksam wird, um die Teilprogramme derart anzuordnen, dass die Teilprogramme in Übereinstimmung mit der mittels der Verarbeitungsreihenfolge-Einstelleinrichtung aufgestellten Verarbeitungsreihenfolge ausgeführt werden.

2. Automatisches Programmiergerät nach Anspruch 1, welches ferner folgendes aufweist:
eine Werkzeugbedingungs-Einstelleinrichtung zum Einstellen von Information über Werkzeuge in der Gestalt eines Dialoges zwischen dem Betreiber und dem Gerät bei jeder Anzahl eines Werkzeugmagazins eines automatischen Werkzeugwechslers;
wobei das numerische Steuerprogramm ferner auf der Anzahl des Werkzeugmagazins basiert, und wobei, um das numerische Steuerprogramm zu erzeugen, die automatische Programmiereinrichtung wirksam wird, um ferner die Werkzeuginformation der entsprechenden Anzahl des Werkzeugmagazins von der Werkzeugbedingungs-Einstelleinrichtung zu erhalten, um die Teilprogramme für die Bestandteile des zylindrischen Teils und der Achsteile zu erzeugen.

3. Automatisches Programmiergerät nach Anspruch 1, wobei die Verarbeitungsreihenfolge-Einstelleinrichtung ausgelegt ist, um gemeinsame Verarbeitungs-Charakteristika bei der Verarbeitung des zylindrischen Teils und der Achsteile im ganzen bzw. gemeinsam einzustellen.

4. Automatisches Programmiergerät nach Anspruch 3, wobei jedes der Teilprogramme ein mittels numerischer Steuer-Codes beschriebenes Programm und ein Programm aufweist, welches mittels Makro-Codes beschrieben wird, die eine Vielzahl von numerischen Steuer-Codes enthalten.

5. Automatisches Programmiergerät nach Anspruch 4, wobei das numerische Steuerprogramm ein Programm, welches die Verarbeitungsbedingungen und Verstellbedingungen enthält, und ein Programm, welches gemeinsame Parameter, das Walzenprofil und Werkzeugbedingungen enthält, aufweist.
